# EUROPEAN PATENT APPLICATION

(11) **EP 2 281 466 A1**
(43) Date of publication of application: **09.02.2011**
(21) Application number: 10164748.5
(22) Date of filing: 02.06.2010
(51) Int. Cl.: A23L 2/54, A23L 2/56

(54) **A method for preparing an oxygen enriched cocktail**

(30) Priority: 01.07.2009 EA 200900979
(71) Applicant: Nikolaevitch Kalinkin, Andrey, Moscow 109651 (RU); Ivashchenko, Denys, 25100 Brescia (IT)
(72) Inventor: Nikolaevitch Kalinkin, Andrey, 109651, Moscow (RU)
(74) Representative: Benatov, Emil Gabriel

(57) **Abstract**

A method of implementing technological solution described herein yielded both an improved quality of cocktail making and a simplified procedural approach to the preparing of a cocktail.
A method for preparing an oxygen enriched cocktail beverage is characterized by using water, flavor additive and foam generating agent wherein they are placed in a closed/open container. To prepare one liter of the cocktail, the following proportions of ingredients must be met: 1-39ml - flavor additive, 0.1-10ml - foam generating agent, water - 51-97.9ml. Oxygen-enriched water must meet the standard of 1 - 62 mg of oxygen per one liter of water. The mixing of all the components in the tank shall continue until the volume of the solution in the tank is increased higher than the calculated volume of all ingredients in the blend before mixing begins.

## Description

This invention belongs to a group of food processing techniques, in particular, ways to prepare beverages. Within the group of beverages this invention is associated with making a cocktail based on water (main component) by adding syrup, a foam generating agent and oxygen. The cocktail is enriched with oxygen in an effort to both improve the tone of the body and to restore functions lost partially or completely as result of "oxygen hunger" experienced by the tissues. There is an additional benefit of enriching the cocktail with oxygen, which is the improvement of its taste properties.

There is a mix to prepare oxygen enriched cocktail comprised of water, fruit 'n' berry juice, water extract of officinal herbs and/or berry extract, and a foam generating agent. All components are blended together and then the ready mix is enriched with oxygen used as a "gassing agent" while fine foam is generated. While the mixture is foaming, fruit syrup or rosehip syrup is added. A water-gelatin solution made at 70-90°C serves as the foam generating agent. Prior to beginning a process of enrichment, the ready-to-go mix is set aside for one hour (RU 2150856C1, June 20, 2000)

There is a foam generating device and its method of action determines the means of producing the cocktail. The device's action involves making a mixture of several liquids in a designated tank, adding oxygen to it and then the foam generating agent is sprayed on the surface of the mixture in the tank (SU 1634279A1, March 15, 1991).

There is a mix to be used for oxygen-enriched cocktail production. The mix consists of a liquid base (herbaceous component [a decoction or an infusion], fruity and berrylike component [juice]), sugar and the foam generating agent (SU 1797478A3, 23.02.1993). This mix is used as an instrument (carrier) to introduce oxygen into the human body. To produce the ready-to-go product, all components are stirred to reach complete sugar dissolution and only then is the blend enriched with oxygen.

The cocktail making machine is equipped with a tank used to saturate the cocktail with oxygen and also with a tool used to inject the foam generating agent into the cocktail. All herbaceous components are introduced into the cocktail at the stage of the foam generating agent injection (UA 61079C2, December 15, 2003). The design of the cocktail making machine enables cocktail production using all the listed components.

There is a cocktail enriched with oxygen, which consists of licorice (Glycyrrhiza glabra) root syrup, fruit and vegetable juice and an amino acid-vitamin agent (UA 78886C2, April 25, 2007).

Each method consists of operations such as the mixing of a liquid base with additives and introducing oxygen into the resulting compound (patents US 4027045, May 31, 1977 and US 5378480, January 03, 1995). Additionally, there are numerous technical solutions determined to be analogous to the technical approaches introduced in the foregoing patent documentation.

From the number of known technical solutions, the closest to the essence of the foregoing method and to the final result is the method which, in short, can be described through the following steps. A liquid-like substance is used for a base. It is placed in a closed/open canister followed by a foam generating agent and a "gassing agent". The compound is then thoroughly mixed using a method known as "gaseous substance barbotage". Calculations of components for barbotage: production of 1 liter of cocktail requires 0.5 - 0.9mg of foam generating agent and 0.3 - 1.0mg of gaseous oxygen. The rest of the mixture is represented by its liquid portion. The mixing of ingredients for the cocktail takes only 6-120 seconds. Barbotage is to be carried out prior to the mixing, during the mixing and after the mixing (patent RU2346608C2, March 25, 2008).

There are common characteristics between a known technical solution covered in patent description RU2346608C2, September 21, 2006, and the foregoing. Those features lay in the essence of the making of an oxygen enriched cocktail and present a combination of operations required to complete the cocktail creation. In detail, to prepare an oxygenated cocktail, drinking water is used as a base. The water is placed in a closed/open container. Some syrup or a juice concentrate is added to it. To the resultant mix (water-juice concentrate mix or water-syrup mix) a foam generating agent is added, for example spray-freeze-dried protein or protein-loaded powder together with either gelatin or licorice root syrup. Another mixing method might be a ready-to-go mix made of combinations either of juice + foam generating agent or of syrup + foam generating agent. They are added to the container with water along with the oxygen.

A significant downside of the method covered in the description of patent RU2346608C2 is that the mixing period (6 - 120 seconds) does not allow sufficient time to prepare a cocktail which can meet the standard requirement set for such volume of production. Such a problem originates from the fact that both the quality control of the mixing process and the quality control of the ready cocktail are quite difficult. The mixing of this amount can be completed in 6 seconds or in 120 seconds. With an oxygen-containing cocktail, consumer appeal largely depends on its level of oxygen saturation. This said, it must be specified that oxygen saturation does not depend on the timing of the mixing process, but rather on the intensity of mixing in the container. Numerous tests reveal that the longer the mixing lasts, the less oxygen content is found in the final product. It is worth noting that the quality of ready cocktail also depends on the cross-section measurement of the mixing tank. The mixing tank cross section measurement is taken in the area where actual mixing is occurs. To be specific, a figure of crucial importance is the area dimension of the cocktail contact with the atmosphere (an open tank has direct contact with the atmosphere), or, the area dimensions of cocktail contact with the air located above the mixing compound (this refers to a closed tank, which has no direct contact with the atmosphere). In cases where the cocktail quality depends on the mixing period, problems arise in that it becomes difficult to control the cocktail quality and its readiness. Also, the linkage between cocktail quality and the duration of the mixing period requires additional operations to conduct cocktail quality control which, in turn, necessitates additional room/space to provide the control for the oxygen level in the ready-for-consumption cocktail.

The above-described technical solution yielded procedural quality improvement and simplified the process. The technical results obtained during oxygen cocktail making shall be noted for the means employed in mixing. The process starts with either regular drinking water or oxygen enriched water. The water is then placed in an open or closed tank and a choice of flavoring additive is introduced. Options for herb-flavored or other additives are: herbaceous decoction and/or infusion, and/or a syrup, and/or an extract, and/or a juice concentrate. Once the flavor additive is introduced, a choice of a foam generating agent is also introduced into the blend. Options for a foam generating agent are: freeze-dried egg white powder and/or gelatin, licorice root extract (Glycyrrhiza glabra), and/or pectin, and/or treacle (molasses), and/or soaproot (Chlorogalum pomeridianum), and/or seaweed extract. Another way of preparing the blend is by simultaneously adding a flavor and a foam generating agent in a form of a mixture of the flavor additive and the foam generating agent. Measurements for ingredients to prepare one liter of the mix containing foam generating agent and flavor additive are: 1-39ml - flavor additive, 0.1-10ml - foam generating agent, water - 51-97.9ml. Moreover, the water can be enriched with oxygen at any stage -- prior to being placed in the container, during placement or when already in it. The amount of oxygen to enrich the water ranges from 1 to 62 mg per one liter of water. Options for enrichment include:
- the solution in the tank is mixed simultaneously with barbotage, or
- mixed with a blending machine, or
- the solution is mixed and barbotage is done simultaneously with adding oxygen, or
- the blend is mixed with oxygen enriched water,
   provided that the process of mixing continues until the volume of the blend in the tank increases 1.5-20 fold above the calculated volume of all ingredients in the blend before mixing begins.

First, the flavor additive is placed in the tank (it is preferable to have the flavor additive already mixed with the foam generating agent), and then the oxygen enriched water is added to it. The oxygen enriched water is added in the tank mainly under pressure higher than the atmosphere or equal to it, and the barbotage of the blend can begin either during the water injection phase or immediately after it. Regular drinking water can be used in lieu of oxygen enriched water provided that the former will be enriched with oxygen in the tank and the mixing will be performed at the same time.

This methodology is supported with examples of the oxygen containing cocktail preparation. To prepare the cocktail a closed/open gauge tank is used. Gauges on the tank must enable a judgment of quantity of liquid in the tank, a quantity of the foam above the liquid constituent, and the total volume of the two.

The following components are used to prepare a cocktail. The first component - drinking water and/or oxygen enriched drinking water is placed in an open/closed container. The second component - for the purposes of the foregoing description conditionally named "flavor additive" - is a decoction and/or herbal infusion, and/or syrup, and/or extract, and/or concentrate. The flavor additive may be of medicinal properties, which depends on the objective set before the cocktail is created. In case the cocktail is prepared on the premises of a medical installation, then a prescribed medication will be added in the flavor additive or in the container with the cocktail, whichever is recommended by the primary care physician. The first two components can be introduced into the container in any sequence; nevertheless, it is preferable to inject the flavor additive first.

Once the container is filled with a blend consisting of water with a chosen flavor additive, then liquid or a solid foam generating agent is added - freeze-dried egg white powder and/or gelatin, and/or licorice (Glycyrrhiza glabra) root extract, and/or pectin, and/or treacle (molasses), and/or soaproot (Chlorogalum pomeridianum), and/or seaweed extract. In case a solid foam generating agent is used, its quantity in grams is converted over to milliliters provided that the solid agent is pre-moistened and dry phase figures recalculated into wet phase figures.

The foam generating agent can be injected into the container at any stage, nevertheless, it is preferable to place it before the drinking water or oxygen enriched drinking water is placed in the tank.

This method envisages the flavor additive and the foam generating agent being simultaneously injected into the container both through two isolated channels, and in the form of a ready mix. The method on hand features the injection of the flavor additive in the form of a liquid and for that reason its quantity is measured in milliliters. This is necessitated by the fact that the cocktail quality control and the oxygen content in the tank are both measured and enacted dependant on the cocktail mix in the tank volume increase during mixing, which is calculated in milliliters.

To prepare the required volume of a cocktail with both parameters of quality and guaranteed oxygen content set in advance, certain steps must be taken. First - a definitive volume of each component must be established, second - figures corresponding with the volume of each component are added and, thus, a consolidated figure showing the total volume of the components is achieved, third - the shortage of volume to reach the required capacity is calculated, and fourth - the resultant amount of missing liquid (regular drinking water or oxygen-enriched drinking water) is injected in the tank.

To prepare one liter of cocktail, the following components must be placed into the tank: flavor additive - 1 - 39ml, foam generating agent - 0.1 - 10ml, water - 51 - 97.9ml. The enrichment of water with oxygen can either be introduced before injection into the tank, or once it is already in the tank. Water enriched with oxygen prior to the cocktail making can also be used. The oxygen content in the water should be in the range of 1 - 62 mg/L.

Mixing can be done in several ways: 1) simultaneous mixing and barbotage in the tank, 2) using a mixer, 3) simultaneous mixing, barbotage and oxygen enrichment, or 4) mixing with oxygen enriched water injected into the tank. Mixing is continued until the volume in the tank is 1.5 - 20 times larger than the calculated volume of all the components prior to mixing.

It is anticipated that, at first, a mixture of a flavor additive with a foam generating agent is injected into the tank, and then oxygen enriched water is added. It is also conceived that oxygen enriched water is pressure injected into the tank, while simultaneous barbotage is continuing, or oxygen enriched water is pressure injected into the tank and as soon as injection is completed, the mixing of the cocktail begins.

Several types of syrup can be used separately from foam generating agents or in the form of a mixture with the latter, for example "Cherry", "Apple", "Rosehip", "Grapes, and "Pineapple". A syrup mix with foam generating agent is preferable since such an option simplifies the process of injection of all components, positively affecting the technological process of cocktail making. All things being equal, regular drinking water or oxygen enriched water is injected after the above- mentioned components have been placed in the tank. Water can be pressure injected with pressures above the atmospheric level or equal to it. Once all the thereabove mentioned components are in the tank, mixing begins. Mixing is done until the total volume of the cocktail in the tank is 1.5 - 20 times larger than that of the total volume of all the components before the mixing stage.

It is established that oxygen content in the cocktail mainly depends on the mixing time and quantity of the foam generating agent. The longer the mixing stage takes, the less oxygen remains in the cocktail, whereas the more foam generating agent is in the cocktail, the higher the oxygen content is after mixing. Optimum conditions for cocktail making are met when the quantity of the foam generating agent is nominal and the mixing time is minimal. A clear correlation between the oxygen quantity and cocktail mixing time and volume is obvious.

Also, it was established that the oxygen content is subjected to the influence of the shape of the container capacity and of its cross-section dimensions, provided that the cross-section measurements are taken immediately above the level of the blend. Since the following parameters (container shape, cross-section of the uppermost level of liquid dimensions and the speed of mixing) are variable parameters, and being aware of the fact that many additional factors affect the mentioned variables, a mathematical relationship was discovered. The resultant quotient reflects the degree of oxygen content dependence from ration Vc/Vκ, where Vc equals the volume of each component of the mix in the tank before mixing; Vκ equals the volume of each component of the mix in the tank after mixing.

In essence, Vc/Vκ reflects the percentage of the tank content increase during the cocktail making process. During mixing, foaming of the blend occurs. The quantity of foam is maintained and amplified by continued mixing. Notable is that the foam is that vital element controlling oxygen retention in the beverage until it is consumed on an appreciable level. The cocktail volume during mixing is increasing in the beginning, reaching its maximum, and then, depending on the duration of mixing, it decreases to its minimum level. The optimal level of volume increase during mixing was determined and oxygen loss at this optimum level is minimal.

The speed of foaming (increase of initial volume of the tank content) depends on the initial volume of each component and, accordingly, on the total volume of all components mixed in the tank. The speed of mixing largely depends, first of all, on the angular speed or linear speed of the mixer head movement and, secondly, on the thermodynamic properties of the tank content - the syrup viscosity and/or juice concentration, the temperature of the environment surrounding the tank and, accordingly, the temperature inside the container. The parameters above jointly affect the cocktail volume increase compared to the initial figure, which was calculated by simple addition of the figures associated with each component volume prior to mixing.

During the cocktail mixing process, the speed of mixing is controlled by several means: a) increasing or decreasing the pressure of water (in case water is pressure injected), b) changing the speed of the mixing head rotation, and c) altering the speed of barbotage, which is obtained by 1) rotating the tank in an opposite direction to the mixing head direction, 2) rotating the tank in the same direction with the mixing head but altering the speed, and 3) rotating in another direction/plane (provided that the tank's axis can be tilted), if rotating in that direction intensifies barbotage.

Oxygen enriched water should meet a "per liter" oxygen content requirement level of >1mg > 5.0mg, > 9.0mg, but no more than 62 mg per set volume (per one liter of regular drinking water).

This method of cocktail making envisages any known concentrated solution of the sugars (saccharose, glucose, and fructose) or any other solution of those in water or in a natural fruit juice to be utilized as a syrup. In case natural fruit juice or juice concentrate is chosen to be used, the technology of the process is not to be tampered with. The table below gives examples of cocktail making calculations.

**Table of cocktail components and oxygen content**

| Cocktail component | Volume, ml/L | Oxygen content, mg/L | Blend volume increase, Vc/Vκ | Cocktail oxygen content |
|---|---|---|---|---|
| 1. Foam generating agent | 0,1 | | | |
| 1. Flavor additive | 1,0 | | | |
| 1. Water | 97,9 | 1,0 | 1,50 | 0,95 |
| 2. Foam agent generating agent | 4,95 | | | |
| 2. Flavor additive | 19 | | | |
| 2. Water | 76,05 | 15,5 | | 12,0 |
| 3. Foam generating agent | 10 | | | |
| 3. Flavor additive | 39 | | | |
| 3. Water | 51 | 62,0 | 20,0 | 40,0 |

## Claims

1. A method for preparing the oxygen enriched cocktail, is **characterized by**:
- adding regular drinking water or oxygen enriched water in an open or closed tank;
- adding a choice of flavoring additive: herbaceous decoction and/or infusion, and/or a syrup, and/or an extract, and/or a juice concentrate, resulting in a solution comprised of water and the introduced flavor additive;
- adding a choice of foam generating agent into the solution: freeze-dried egg white powder and/or gelatin, licorice root extract, and/or pectin, and/or treacle, and/or soaproot, and/or seaweed extract;
- or simultaneously introducing a flavor additive and a foam generating agent in the form of a mix of the flavor additive and the foam generating agent;
- using the following ingredients to prepare one liter of the mix containing both the foam generating agent and the flavor additive: 1-3 9ml - flavor additive, 0.1-10ml - foam generating agent, water - 51-97.9ml;
- enriching the water before it is placed in the tank, during placement in the tank or already in the tank;
- enriching the water using 1 - 62 mg of oxygen per one liter of water;
- mixing of the solution in the tank simultaneously with barbotage, or
- mixing it with a blending machine; or
- mixing it and doing barbotage simultaneously with adding oxygen; or
- mixing it with oxygen-enriched water;
- adhering to the rule that mixing must continue until the volume of the solution in the tank is increased higher than the calculated volume of all ingredients in the blend before mixing begins.

2. A method as claimed in claim 1, further comprising the step of:
mixing all the components in the tank until the volume of the foamed solution is 1.5 - 20 times larger than the calculated volume of all the ingredients in the blend before mixing begins.

3. A method as claimed in claim 1, further comprising the step of:
adding, first, a flavor additive containing a foam generating agent in it, followed by oxygen-enriched water.

4. A method as claimed in claim 1, further comprising the step of:
pressure adding oxygen-enriched water into the tank and doing barbotage at the same time.

5. A method as claimed in claim 1, wherein pressure adding oxygen-enriched water into the tank, and once water is injected in full, the mixing of the cocktail in the tank begins.
